# EUROPÄISCHE PATENTSCHRIFT

(11) **EP 0 355 262 B1**
(45) Veröffentlichungstag und Bekanntmachung des Hinweises auf die Patenterteilung: **29.12.1993**
(21) Anmeldenummer: 89107411.4
(22) Anmeldetag: 25.04.1989
(51) Int. Cl.: H02K 37/14, H02K 7/116, H02K 3/46, H02K 5/167, H02K 37/22

(54) **Kreuzspul-Drehmagnetanordnung**
Device with a cross-wound coil and a rotary magnet
Dispositif à bobine croisée et aimant rotatif

(30) Priorität: 22.08.1988 DE 3828464
(43) Veröffentlichungstag der Anmeldung: 28.02.1990
(73) Patentinhaber: VDO Adolf Schindling AG, D-60487 Frankfurt (DE)
(72) Erfinder: Sudler, Roland, D-6000 Frankfurt/Main (DE)
(74) Vertreter: Klein, Thomas, Dipl.-Ing. (FH)

(56) Entgegenhaltungen:
- EP-A- 0 248 472
- DE-A- 2 732 364
- FR-A- 2 505 572
- US-A- 4 115 713
- PATENT ABSTRACTS OF JAPAN vol. 9, no. 106 (E-313)(1829) 10. Mai 1985 & JP-A-59 230 447 ( NAKAGAWA DENKA SANGYO ) 25. Dezember 1984

## Beschreibung

Die Erfindung betrifft eine Kreuzspul-Drehmagnetanordnung mit
- einem zusammen mit einer Welle drehbar gelagerten Rotor, der insbesondere aus einem Dauermagneten mit sich diametral gegenüberliegenden Dauermagnetpolen besteht,
- einer Spulenanordnung, die in einem Winkelabstand von insbesondere 90 Grad zueinander angeordnete Spulen aufweist wobei
- zur Aufnahme der Spulen ein in zwei Teile geteilter Spulenkörper vorgesehen ist, in welchem Lager der Welle des Rotors dergestalt ausgeformt sind, daß die Welle auf wenigstens einer vorderen Außenseite aus dem Spulenkörper herausragt.

Eine derartige Kreuzspul-Drehmagnetanordnung ist aus der EP-A-0 248 472 bekannt. Dabei handelt es sich um einen Schrittmotor, der mit einer Mehrzahl gleicher Schrittmotoren zur Darstellung von Bildelementen im Rahmen einer Gesamtanzeige verwendet werden soll und zur Drehung geometrischer Körper dient, auf deren Außenflächen sich unterschiedliche Bildelemente befinden. Im Hinblick auf diesen Anwendungszweck hat man Wert darauf gelegt, daß der Schrittmotor für ein gegebenes Nutzdrehmoment mit möglichst kleinem Bauvolumen ausgeführt werden kann. Der bekannte Schrittmotor ist für andere Anwendungszwecke nur mit erheblichen konstruktiven Änderungen geeignet, insbesondere ist er nicht für eine Mehrzahl unterschiedlicher Anwendungszwecke brauchbar.

Eine andere bekannte Kreuzspul-Drehmagnetanordnung ist speziell als Motor zum Antrieb eines Uhrwerks ausgebildet (DE-A-34 19 100) In diesem Motor weist ein drehbar gelagerter Rotor sich diametral gegenüberliegende Dauermagnetpole auf. Eine mehrphasige Spulenanordnung dient zur Erzeugung eines den Rotor auslenkenden Magnetfelds in Abhängigkeit von Ansteuersignalen, die an Spulen der Spulenanordnung anliegen. Die Spulenanordnung weist dazu mehrere, mit gleichem Winkelabstand zueinander angeordnete, den Rotor umschließende Spulen auf, die mit um eine bestimmte Phasenverschiebung versetzten Sinus-Spannungen ansteuerbar sind. Insbesondere besteht die Spulenanordnung aus zwei rechtwinklig zueinander angeordneten Spulen, die mit zwei um 90 Grad versetzten Sinus-Spannungen gespeist werden. Die Drehachse, bzw. Welle kann die Sekundenwelle oder die Minutenwelle des Uhrwerks darstellen. Im letztgenannten Fall ist an einem Ende der Drehachse ein Minutenzeiger befestigt, der über ein Ziffernblatt bewegt werden kann. Über ein auf der Drehachse angeordnetes Antriebsritzel und ein Wechselrad wird ein Stundenrad angetrieben, welches ein die Drehachse umschließendes Stundenrohr aufweist. An dem Stundenrohr ist ein über das Ziffernblatt bewegbarer Stundenzeiger befestigt. - Bei diesem Motor ist wie bei anderen bekannten Kreuzspul-Drehmagnetanordnungen die spezielle Ausbildung im Hinblick auf einen bestimmten Verwendungszweck, hier zum Antrieb eines Uhrwerks, nachteilig, die eine andere Verwendung der Kreuzspul-Drehmagnetanordnung nicht ohne große Einschränkungen oder konstruktive Umgestaltungen gestattet. - Da der Motor mit Sinus-Spannungen fortlaufend zu speisen ist, muß mit einem entsprechend hohen Energieaufwand gerechnet werden.

Dieser zum Antrieb eines Uhrwerks ausgebildete Motor mit Antriebsritzel, Wechselrad und Stundenrad sowie einem Stundenrohr ist beispielsweise nicht generell als Einrichtung zur Anzeige einer mechanischen Meßgröße, insbesondere der Geschwindigkeit eines Kraftfahrzeugs, geeignet.

Bei einer bekannten Einrichtung zur Anzeige einer mechanischen Größe, insbesondere der Geschwindigkeit eines Kraftfahrzeugs, ist ein zur Verstellung eines Zeigers dienendes Meßwerk vorgesehen, welches über einen Umsetzer mit einem einen Puls mit der Meßgröße proportionaler Pulsfrequenz erzeugenden Geber in Verbindung steht (DE-OS 27 30 699). Als Meßwerk dient ein vor- und rückwärts laufender Schrittmotor. Dieser wird mit einer richtungsbewerteten Impulsfolge gespeist, welche aus während aufeinanderfolgenden definierten Zeitintervallen in Abhängigkeit von der Meßgröße gebildeten Zählwerten, die miteinander verglichen eine vorzeichenbewertete Differenzzahl ergeben, erzeugt wird. Der sich entsprechend dieser Differenzzahl einstellende Schrittmotor ist über ein Getriebe mit einem Zeigerwerk gekuppelt. - Ein derartiger zum Stand der Technik gehörender Schrittmotor eignet sich jedoch nicht ohne weiteres für andere Verwendungszwecke, beispielsweise als Stellglied, Quotientenmeßwerk oder Sensor.

Das gilt auch für den Miniatur-Elektromotor gemäß US-A-4 115 713, bei dem im Spulenkörper Bohrungen für Anschlußstifte bzw. Schrauben vorgesehen sind, sowie für den Schrittmotor gemäß FR-A-25 02 572, dessen Gehäuse Klipse zur Befestigung eines Getriebeblocks aufweist. In beiden Fällen handelt es sich um für spezielle Anwendungszwecke konzipierte Kreuzspul-Drehmagnetanordnungen, die für andere Anwendungszwecke konstruktiv mehr oder weniger aufwendig verändert werden müßten.

Der vorliegenden Erfindung liegt daher die Aufgabe zugrunde, eine Kreuzspul-Drehmagnetanordnung der eingangs genannten Gattung so weiterzubilden, daß diese teilweise von der konkreten Anwendung unabhängig ist, andererseits aber möglichst einfach an den jeweiligen Anwendungsfall angepaßt, d. h. modifiziert oder ergänzt werden kann.

Zur Lösung dieser Aufgabe soll die eingangs beschriebene Kreuzspul-Drehmagnetanordnung in der Weise weitergebildet werden, daß
- auf der vorderen Außenseite einer der beiden Teile des Spulenkörpers nasenförmige Klipse zur klemmenden Anbringung eines Zwischenkörpers und
- in dem Spulenkörper parallel zu der Welle Bohrungen für Anschlußstifte vorgesehen sind.

Damit wird in konstruktiv unkomplizierter Weise ein Grundsystem geschaffen, welches je nach dem Anwendungsfall baukastenartig modifiziert werden kann. Die allen Modifikationen gemeinsamen Bauteile der Kreuzspul-Drehmagnetanordnung sind so ausgestaltet, daß sie miteinander und mit den anderen speziellen Bauteilen der Modifikationen ohne sonstige Änderungen kombiniert werden können. Die Montage sämtlicher Modifikationen der Kreuzspul-Drehmagnetanordnung kann somit zeit- und kostengünstig erfolgen. Hierzu trägt insbesondere der geteilte Spulenkörper mit den an seinem einen Teil nach der vorderen Außenseite herausragenden nasenförmigen Klipsen bei, an denen jeweils ein Zwischenkörper mit unterschiedlicher innerer Gestaltung für spezielle Funktionen angeklammert werden kann. Diese Zwischenkörper gehören jedoch nicht zu dem Grundsystem, welches aus dem Rotor mit Welle, dem zweiteiligen Spulenkörper mit Wicklung sowie den Anschlußstiften besteht, welche durch achsparallele Bohrungen in dem Spulenkörper gesteckt werden können. Dieses Grundsystem läßt eine Verwendung der Kreuzspul-Drehmagnetanordnung für alle vorgesehenen Anwendungen zu, nämlich als Schrittmotoranzeige, z.B. für eine Fahrzeuggeschwindigkeit oder Motordrehzahl, als Zwei-Phasen-Schrittmotor, z.B. zur Wegstreckenzählung, als Stellglied, z.B. zur Verstellung eines Bauteils eines Kraftfahrzeugs, als Quotientenmeßwerk, z.B. für eine Tank-Temperaturanzeige, als Quarzuhr insbesondere mit Vor- und Rückwärtsschnellverstellung sowie als Sensor, z.B. für eine Geschwindigkeits- und Richtungsanzeige.

Zur einfachen Fertigung der Bauteile der Kreuzspul-Drehmagnetanordnung sowie deren Montage ist weiterhin nach Anspruch 2 vorteilhaft der Spulenkörper im wesentlichen in einer Querschnittsebene, d.h. senkrecht zu der zwischen den beiden Teilen des Spulenkörpers eingebauten Welle geteilt.

Zum Erreichen der voranstehend genannten Vorteile ist weiterhin zweckmäßig aus jedem der beiden Teile des Spulenkörpers eines der Lager der Welle ausgeformt. - Der Rotor wird zwischen den beiden Lagern in dem zylindrischen Innenraum des Spulenkörpers angeordnet. Zwei Wicklungen werden auf dem Spulenkörper als Stator um 90° gegeneinander verdreht so aufgebracht, daß sich die Leiter parallel zu der Welle jeweils zwischen zwei längs des Umfangs benachbarten Stegen befinden.

Die zweckmäßige Formgebung des Spulenkörpers ist im einzelnen in Anspruch 10 definiert.

Je nach dem speziellen Anwendungsfall kann der Zwischenkörper lediglich als Distanzstück dienen oder ein Getriebe beinhalten, siehe Anspruch 4, oder ein Rückstellelement, einen Anschlag sowie eine Dämpfungseinrichtung einschließen, vgl. Anspruch 7. In jedem Fall erfolgt durch die nasenförmigen Klipse an dem Spulenkörper eine genauer Zentrierung sowie eine lagerichtige Zuordnung und Befestigung des Zwischenkörpers. Das Zwischenstück kann zur Befestigung eines Ziffernblatts dienen. Indem der Zwischenkörper zusammen mit dem Spulenkörper stets die gleiche Höhe hat, können derartige Kreuzspul-Drehmagnetanordnungen jeweils hinten an einer Leiterplatte angesetzt werden und bei einem gleichbleibenden Abstand zu dieser Leiterplatte nach vorne stehen, wo die an den Zwischenstücken befestigten Skalen auf gleichem Niveau liegen.

Ein Getriebe in dem Zwischenkörper wird in den Anwendungsfällen der Kreuzspul-Drehmagnetanordnung eingesetzt, in denen diese zur Schrittmotoranzeige, als Zwei-Phasen-Schrittmotor oder als Stellglied verwendet wird. Insbesondere dann, wenn das Zwischenstück mit einem Getriebe zur Wegstreckenzählung mit einem Zahlenrollenwerk eingesetzt werden soll, welches einen gleichen Durchmesser wie das Kreuzspul-Drehmagnetwerk hat, erfolgt der Abtrieb aus dem Getriebe nach Anspruch 5 zweckmäßig exzentrisch. Die Abtriebswelle kann in diesem Fall ohne weiteres in eine Triebscheibe des Wegstreckenzählers mit Innenverzahnung eingreifen.

Das gewünschte spielfreie Getriebe für eine Schrittmotoranzeige wird nach Anspruch 6 mit einer vorgespannten Feder erreicht, welche auf ein Zahnrad auf der Abtriebswelle einwirkt. Die Feder ist bei 0° Auslenkung am stärksten vorgespannt und bei Vollausschlag von ca. 45° am wenigsten. Es kommt dabei darauf an, daß das Federmoment wesentlich kleiner als das von dem Kreuzspul-Drehmagnetwerk abgegebene Moment ist.

Die durch die achsparallelen Bohrungen gesteckten Anschlußstifte, an denen die Kreuzspul-Drehmagnetanordnung befestigt werden kann, ragen nach Anspruch 8 auf einer vorderen Außenseite aus dem Spulenkörper und gegebenenfalls einem auf diesem aufgesetzten Getriebe in dem Zwischenstück heraus.

Besonders zweckmäßig ragen die Anschlußstifte nach Anspruch 9 auch aus einer hinteren Außenseite des Spulenkörpers und damit aus diesem beidseitig heraus. Dadurch kann je eine Leiterplatte sowohl an der hinteren Außenseite des Spulenkörpers als auch unter einem vorderen Ziffernblatt angeordnet werden. Auf der vorderen Leiterplatte können LED-Elemente ohne Sockel aufgelötet werden. Der Stator der Kreuzspul-Drehmagnetanordnung ist vorteilhaft nach Anspruch 10 ausgebildet. Damit wird ohne ausgeprägte Pole infolge des magnetischen Rückschlusses eine Rastwirkung bzw. ein Rastmoment auf den Rotor ausgeübt, welches somit definierte Stellungen des Rotors bestimmt. Infolge des Rastmoments bei nicht erregter Wicklung kann die Ansteuerung mit kurzen Impulsen erfolgen, die eine geringe mittlere Stromaufnahme bedeuten. Es ist also nicht erforderlich, daß die Kreuzspul-Drehmagnetanordnung für spezielle Anwendungen wie in einer Quarzuhr mit sinusförmigen Spannungen gespeist wird. Im übrigen gestattet die Wahl des Materials, aus dem der Abschirmring besteht, eine weitere Anpassung der Kreuzspul-Drehmagnetanordnung an den jeweiligen Anwendungsfall:

Für die Anwendung als Schrittmotoranzeige, als Zwei-Phasen-Schrittmotor, als Stellglied oder als Sensor wird eine Dämpfung der Rotorbewegung mit einem Abschirmring aus ungeglühtem, minderwertigem Eisen erreicht, welches eine Restkoerzitivfeldstärke von ca. 5 Öe hat. Ein Abschirmring für eine Anwendung der Kreuzspul-Drehmagnetanordnung als Quarzuhr hat hingegen eine hohe Restkoerzitivfeldstärke von 50 - 100 Öe. Die durch das Haltemoment im nicht erregten Zustand definierten Raststellungen können je nach Ansteuerung diejenigen eines 1/2 Minuten- bzw. Minutenspringers sein. Durch die hohe Restkoerzitivfeldstärke wird ein Überschwingen des Rotors weitgehend verhindert, so daß zugleich eine Herabsetzung störender Geräuschentwicklung erreicht ist.

Die Erfindung wird im folgenden anhand einer Zeichnung mit sieben Figuren erläutert. Es zeigen:
- Figuren 1a - 1d: in schaubildlicher Ansicht eine Ausführungsform der Kreuzspul-Drehmagnetanordnung mit einem in dem Zwischenkörper angeordneten Getriebe, und zwar in den Figuren 1b - 1d mit jeweils zunehmendem Zerlegungsgrad der Anordnung in der Art von Explosionszeichnungen;
- Figur 2: einen Längsschnitt im wesentlichen durch das Grundsystem der Kreuzspul-Drehmagnetanordnung, jedoch mit aufgesetztem Abschirmring und Ritzel;
- Figur 3: einen Schnitt entsprechend Figur 2, jedoch in einer Version der Kreuzspul-Drehmagnetanordnung mit aufgesetztem Zwischenstück, welches ein Getriebe beinhaltet;
- Figur 4: eine Ansicht auf die Wellen-Seite der Kreuzspul-Drehmagnetanordnung nach Figur 2;
- Figur 5: ein vereinfachtes Blockschaltbild einer mit der Kreuzspul-Drehmagnetanordnung aufgebauten Schrittmotoranzeigeeinrichtung;
- Figuren 6a, 6b: zeitliche Verläufe von Spannungen, mit denen Spulen der Kreuzspul-Drehmagnetnaordnung gespeist werden, in einer ersten Variante (Sinus/Kosinusansteuerung) und
- Figuren 7a, 7b: entsprechende zeitliche Verläufe der Spannungen in einer zweiten Variante (Tangensansteuerung).

Aus Fig. 1a ist im zusammengesetzten Zustand eine Kreuzspul-Drehmagnetanordnung ersichtlich, die als Zwei-Phasen-Schrittmotor für Anzeigesysteme dienen soll. Sie besteht im wesentlichen aus einem Kreuzspul-Drehmagnetwerk 1 und einem auf dieses aufgesetzten Zwischenkörper 2, der ein Getriebe beinhaltet. Die Längsabmessungen des Kreuzspul-Drehmagnetwerks und des Zwischenkörpers ergeben die gesamte Höhe h der Kreuzspul-Drehmagnetanordnung, die für den Einbau maßgeblich ist. Aus Fig. 1a ist weiterhin eine Abtriebswelle 3 ersichtlich, die exzentrisch aus dem Zwischenkörper 2 nach vorne herausragt. Durch die Kreuzspul-Drehmagnetanordnung hindurchreichende Anschlußstifte, die beidseitig an den Außenseiten dieser Anordnung herausragen, sind mit 4 - 7 bezeichnet. Die vordere Außenseite der Kreuzspul-Drehmagnetanordnung ist mit 8 bezeichnet; sie wird durch eine Platine 9 gebildet, welche den Zwischenkörper vorne abschließt. Die Außenseiten des Kreuzspul-Drehmagnetwerks selbst sind in Fig. 1a verdeckt.

In Fig. 1b ist der Zwischenkörper, welcher das Getriebe beinhaltet, von dem Kreuzspul-Drehmagnetwerk abgenommen, so daß in dem Kreuzspul-Drehmagnetwerk zwei zueinander in einem Winkelabstand von 90° angeordnete Spulen 10 und 11 erkennbar sind, die zusammen eine Kreuzspule oder eine zwei-phasige Wicklung eines Schrittmotors bilden. - Aus einer vorderen Außenseite 12 des Kreuzspul-Drehmagnetwerks ragt ein auf einer Welle befestigtes Ritzel 13 heraus, welches, wie weiter unten beschrieben, so in das Getriebe in dem Zwischenkörper eingeführt werden kann, daß es mit einem Zahnrad in dem Getriebe in Eingriff gelangt.

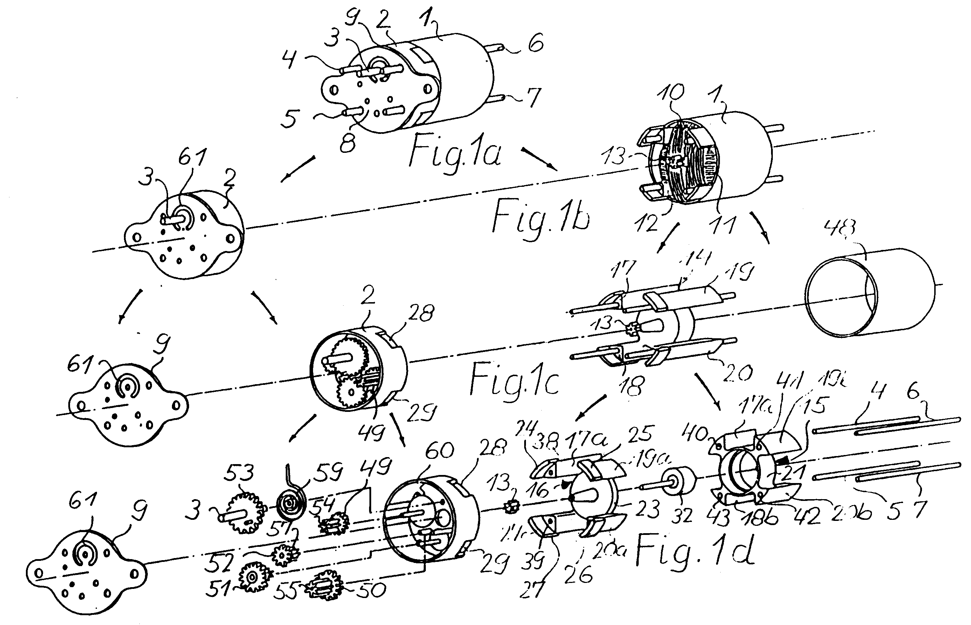

Aus den Figuren 1c und 1d sind weitere Einzelheiten des Aufbaus insbesondere des Kreuzspul-Drehmagnetmeßwerks erkennbar:

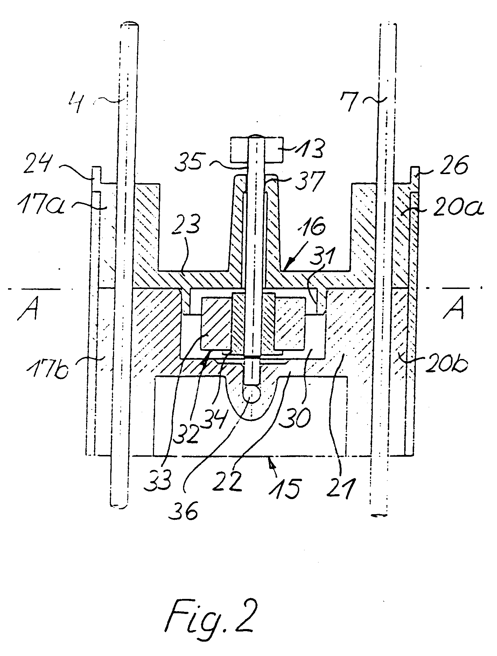

Danach besteht ein allgemein mit 14 bezeichneter Spulenkörper, der im wesentlichen in einer Querschnittsebene A-A geteilt ist - siehe Fig. 2 - aus zwei Spulenkörperteilen 15 und 16.

Der Spulenkörper 15 ist innen zylindrisch geformt und weist vier Stege 17 - 20 auf, deren Außenseiten zylindrisch gekrümmt sind. Gemäß Fig. 1d sind die Stege aus je einem vorderen Stegabschnitt 17a, 18a, 19a, 20a und einem hinteren Stegabschnitt 17b, 18b, 19b, 20b zusammengesetzt, welche die gleichen Querschnittsformen aufweisen. Die Stege sind so geformt, daß sie zwischen sich Kammern zur Aufnahme der beiden Spulen 10 und 11 bilden. Die hinteren Stegabschnitt 17b, 18b, 19b, 20b laufen zu einem zylindrischen Ring 21 zusammen, der innen durch eine Zwischenwand 22 - siehe Fig. 2 - geschlossen ist. Die vorderen Stegabschnitt 17a, 18a, 19a, 20a sind hingegen an einer vorderen Wand 23 angeformt. Von den vorderen Stegabschnitten 17a, 18a, 19a, 20a stehen zungenartige Klipse 24, 25, 26, 27 über, die zum form- und kraftschlüssigen Eingriff in entsprechende Ausnehmungen des Zwischenkörpers 2 vorgesehen sind, um diesen klammernd zu halten. In den Figuren 1c und 1d sind hiervon die Ausnehmungen 28 und 29 erkennbar. Die Ausnehmungen sind nutenförmig und dienen, da äquidistant über den Umfang des Zwischenkörpers verteilt, auch zur Zentrierung.

Der zylindrische Ring 21 des Spulenkörperteils 15 schließt einen ebenfalls zylindrischen Innenraum 30 ein, der nach vorne bzw. in Fig. 2 oben durch die mit einem zylindrischen Ansatz 31 versehene vordere Wand 23 des Spulenkörperteils 16 abgeschlossen ist. In dem zylindrischen Innenraum 30 ist ein Rotor gelagert, der allgemein mit 32 bezeichnet ist. Der Rotor besteht im wesentlichen aus einem Dauermagneten 33, der einander diametral gegenüberliegende Pole bildend magnetisiert ist. Der Rotor ist über eine Nabe 34 auf einer Welle 35 befestigt. Die Welle ist in je einem Lager 36 bzw. 37 in jedem der beiden Spulenkörperteile 15 bzw. 16 drehbar gelagert. An einem vorderen, aus dem Spulenkörperteil 16 hervorragenden Ende der Welle ist auf dieser das Ritzel 13 fixiert.

Aus den Figuren 1c, 1d und 2 ist weiterhin ersichtlich, daß durch Bohrungen, z.B. 38 39 in dem Spulenkörperteil 16 sowie Bohrungen 40 - 43 in dem Spulenkörperteil 15, die paarweise miteinander fluchten, Anschlußstifte 4 - 7 steckbar sind, die im wesentlichen zur Befestigung der Kreuzspul-Drehmagnetanordnung beispielsweise an gedruckten Leiterplatten dienen.

Weiterhin ist aus den Figuren 1c und 2 entnehmbar, daß außen auf die Stege ein zylindrischer Abschirmring 48 aus ferromagnetischem Material aufgeschoben werden kann, dessen magnetische Eigenschaften im einzelnen in Abhängigkeit von dem vorgesehenen Verwendungszweck der Kreuzspul-Drehmagnetanordnung gewählt werden. Der Abschirmring kann insbesondere für die Verwendung der Kreuzspul-Drehmagnetanordnung als Schrittmotoranzeige, Zwei-Phasen-Schrittmotor, Stellglied oder Sensor aus ungeglühtem, minderwertigem Eisen mit einer Restkoerzitivfeldstärke von ca. 5 Öe bestehen und eine Dämpfung der Rotorbewegung bewirken. Wenn ein hohes Rastmoment bei nicht erregter Wicklung (stromlose Spulen) erzielt werden soll, wird hingegen ein ferromagnetisches Material mit hoher Restkoerzitivfeldstärke von beispielsweise 50 - 100 Öe eingesetzt.

Aus den Figuren 1c und 1d ergeben sich weiterhin Einzelheiten des in dem Zwischenkörper vorgesehenen Getriebes, welches bei Anwendung der Anordnung als Schrittmotoranzeige, Zwei-Phasen-Schrittmotor oder Stellglied auf das Kreuzspul-Drehmagnetwerk aufgesteckt bzw. geklipst werden kann. Das Getriebe wird im wesentlichen durch die Zahnräder 49 - 53 und die mit den Zahnrädern 49, 50, 51, 52 verbundenen Ritzel 54 - 57 gebildet, wobei die Zahnräder und Ritzel paarweise ineinander kämmen. Das Ritzel 13 auf der Welle 35 kann durch eine Öffnung 58 so in den Zwischenkörper gesteckt werden, daß es mit dem ersten Zahnrad 49 in Eingriff gelangt. Das Zahnrad 53 auf der Abtriebsseite des Getriebes ist mit der exzentrisch angeordneten Abtriebswelle 3 verbunden.

Das Getriebe ist insbesondere für eine Schrittmotoranzeige spielfrei durch eine Spiralfeder 59 eingestellt, die einerseits an dem letzten Zahnrad 53 angreift und andererseits in einen Schlitz 60 in dem Gehäuse des Zwischenkörpers eingehängt ist. Die Feder ist bei einer Auslenkung von 0° eines nicht dargestellten, mit der Abtriebswelle verbundenen Zeigers am stärksten vorgespannt und bei Vollausschlag von beispielsweise 270° am wenigsten. Das Federmoment ist so relativ gering eingestellt.

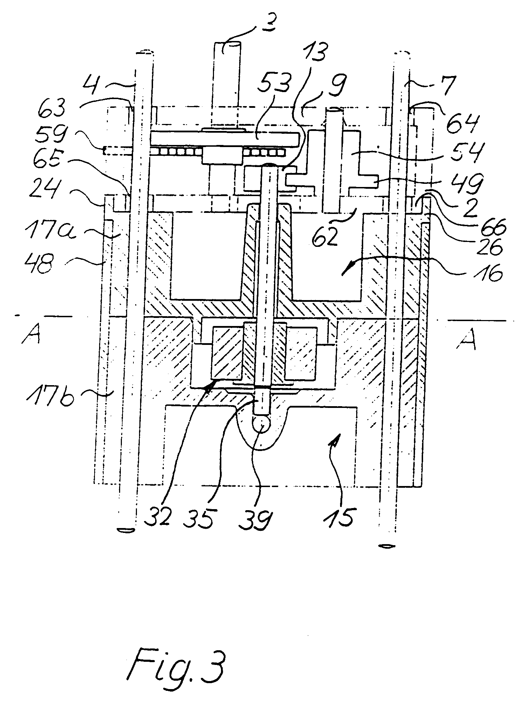

Die Platine 9 kann außerdem für bestimmte Anwendungsfälle, z.B. als Quotientenmeßwerk einen Anschlag dadurch bilden, daß ein mit der Welle 3 verbundenes Anschlagelement an ein Ende einer kreissegmentförmigen Aussparung 61 in der Platine 9 anstößt. Ein Anschlagelement kann beispielsweise durch einen in Fig. 1 nicht dargestellten Stift gebildet werden, der von dem Zahnrad 53 durch die kreissegmentförmige Aussparung 61 hindurch absteht. Bei der Anwendung des Kreuzspul-Drehmagnetwerks als Quotientenmeßwerk kann in dem Zwischenkörper außerdem eine Rückholfeder - gegebenenfalls anstatt der den Spielausgleich bewirkenden Feder 59 - sowie eine Dämpfungseinrichtung enthalten sein. Aus der Darstellung der Kreuzspul-Drehmagnetanordnung in Fig. 3, die im wesentlichen derjenigen des in Fig. 2 dargestellten Grundsystems entspricht, sind außerdem einige Einzelheiten des Inneren des ein Getriebe beinhaltenden Zwischenkörpers 2 ersichtlich. Insbesondere kann dieser Fig. 3 entnommen werden, wie die Zahnräder und Ritzel in der vorderen Platine 9 und einer ihr auf der Rückseite entsprechenden Wand 62 gelagert sind. Weiterhin reichen gemäß Fig. 3 die Anschlußstifte - zu sehen sind die Anschlußstifte 4 und 7 - durch relativ große Bohrungen 63 - 66 in der Platine 9 und Wand 62 hindurch, so daß die Position der Anschlußstifte ausschließlich durch die Bohrungen in den Spulenkörperteilen 15, 16 bestimmt ist. - Das Lager 36 ist sowohl in Fig. 2 als auch in Fig. 3 so ausgebildet, daß es auch axiale Kräfte aufnehmen kann, d.h. das Kreuzspul-Drehmagnetwerk in der gezeichneten lotrechten Stellung betrieben werden kann.

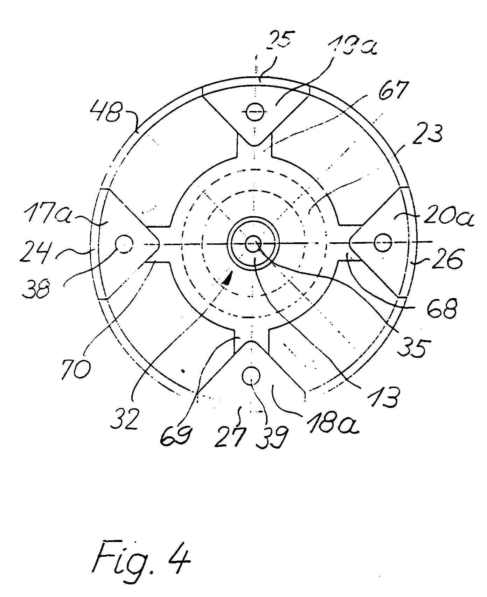

Aus Fig. 4 geht eine Ansicht auf die Vorderseite des Kreuzspul-Drehmagnetwerks ohne aufgesetzten Zwischenkörper hervor: Erkennbar sind die äquidistant längs des Umfangs des im wesentlichen zylindrischen Spulenkörper angeordneten Stege bzw. Stegabschnitte 17a, 18a, 19a, 20a mit den vorstehenden Klipsen 24 - 27, an deren rückwärtige Stirnseiten der auf den Spulenkörper aufgeschobene Abschirmring 48 anstößt. Die Stegabschnitte gehen an den Stellen 67 - 70 in die vordere Wand 23 über. Erkennbar ist weiterhin die zentrale Welle 35, an der das Ritzel 13 befestigt ist. Der durch die vordere Wand 23 abgedeckte Rotor 32 ist lediglich mit einer unterbrochenen Linie angedeutet.

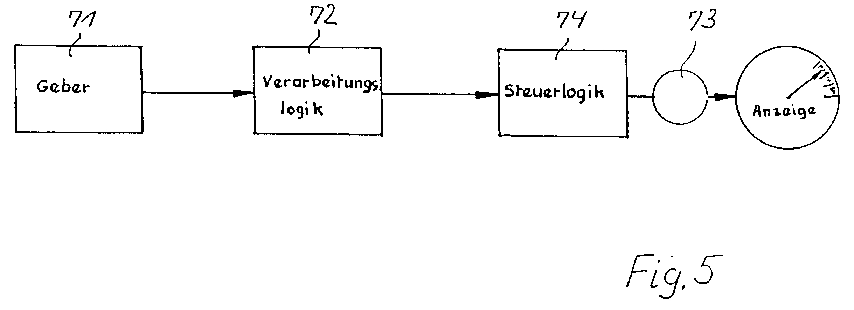

Die elektrische Ansteuerung der Kreuzspul-Drehmagnetanordnung - in dem Falle, in dem sie nicht als Sensor benutzt wird - kann weitgehend konventionell und an den jeweiligen Anwendungsfall angepaßt erfolgen. Für die Anwendung als Schrittmotoranzeige wird auf Fig. 5 Bezug genommen. Ein hierin mit 71 bezeichneter Geber erzeugt einen Puls mit einer Pulsfrequenz, die einer mechanischen Größe, beispielsweise der Geschwindigkeit eines Fahrzeugs oder einer Motordrehzahl proportional ist. In einer dem Geber nachgeschalteten Verarbeitungslogik 72 wird ein Bezugspunkt, der auf einen Nullpunkt bezogen ist, für die Verstellung des Schrittmotors 73 gebildet. Insbesondere kann die Verarbeitungslogik Zähler und eine Steuerung zum Erzeugen von Zählwerten aus dem von dem Geber erzeugten Puls während aufeinanderfolgender definierter Zeitintervalle sowie einen Vergleicher zum Bilden einer vorzeichenbewerteten Differenzzahl aus den in zwei aufeinanderfolgenden Zeitintervallen erzeugten Zählwerten enthalten. Die Verarbeitungslogik 72 kann eine solche Differenzzahl in eine Steuerlogik 74 für den Schrittmotor übertragen, in welcher die Spulen 10 und 11 - siehe Fig. 1b - des Stators speisende Spannungen erzeugt werden, die eine Kurvenform aufweisen, welche eine Drehbewegung des Rotors gemäß der vorzeichenbewerteten Differenzzahl bewirken.

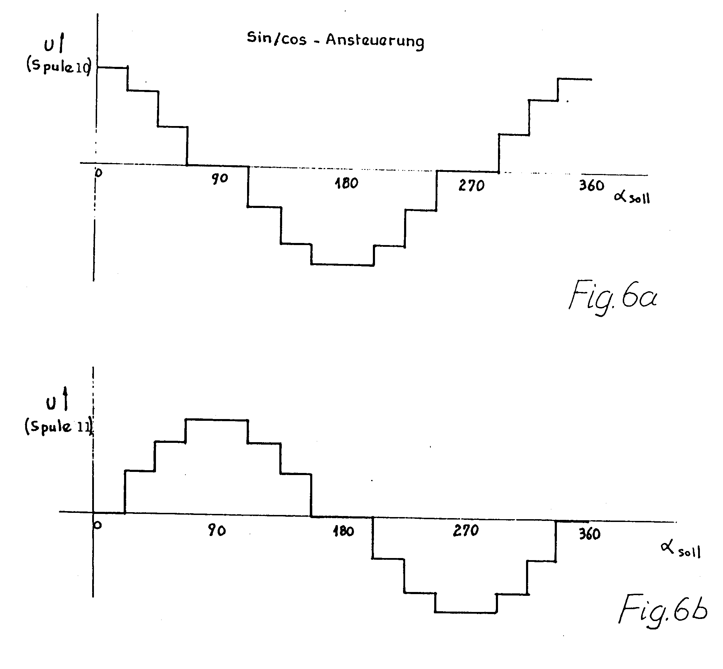

Gemäß den Figuren 6a und 6b werden in der Steuerlogik Spannungen U für die Spulen 10 und 11 erzeugt, die für die Spule 10 eine stufenweise approximierte Kosinusfunktion und für die Spule 11 eine approximiert sinusförmige Kurvenform in Abhängigkeit von dem zur Einstellung gewünschten Drehwinkel α _{Soll} darstellen. Diese Kurvenformen der Spannungen durchlaufen für einen Durchlauf des Rotors von 360° eine volle Periode als zeitabhängig vorbestimmte Amplitudenfolge. Die Amplitudenfolgen können auch als zueinander phasenverschobene angenäherte sinusförmige oder kosinusförmige Spannungsverläufe aufgefaßt werden. Die stufenweise Approximierung der Sinusform und Kosinusform läßt sich mit digitalen Bauelementen leicht realisieren, z.B. bei einer festen Taktfrequenz über ein gesteuertes Tastverhältnis. Wenn die Anzeige von dem Schrittmotor über ein Getriebe erfolgt, welches in dem Zwischenkörper enthalten sein kann, ist eine grobe Stufigkeit der Approximierung zulässig.

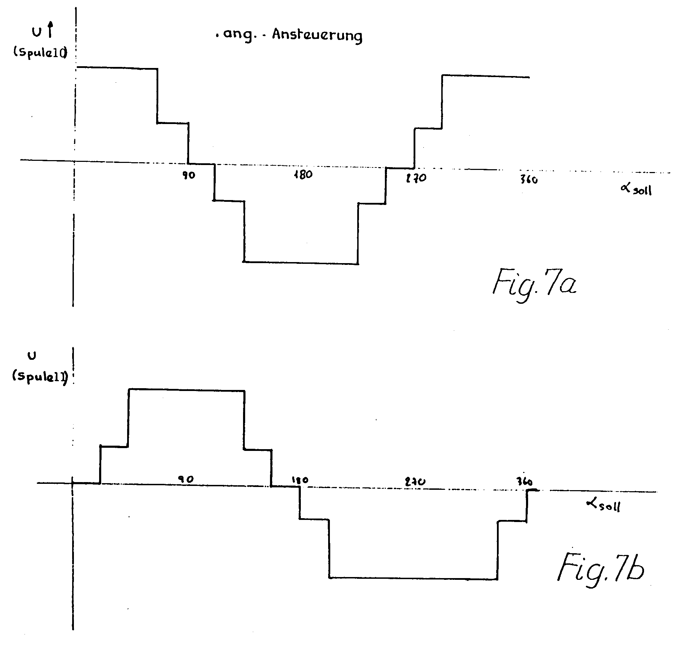

In der Variante nach den Figuren 7a und 7b werden als Spannungen für die Spulen 10 und 11 tangensförmig angenäherte Kurvenformen in der Steuerlogik 74 gebildet, die einen noch geringeren Aufwand als die voranstehend genannten sinus- und kosinusförmigen Kurvenformen zu ihrer Generierung ausreichen lassen.

## Patentansprüche

1. Kreuzspul-Drehmagnetanordnung mit
- einem zusammen mit einer Welle (35) drehbar gelagerten Rotor (32), der insbesondere aus einem Dauermagneten mit sich diametral gegenüberliegenden Dauermagnetpolen besteht,
- einer Spulenanordnung, die in einem Winkelabstand von insbesondere 90 Grad zueinander angeordnete Spulen (10, 11) aufweist, wobei
- zur Aufnahme der Spulen (10, 11) ein in zwei Teile (15, 16) geteilter Spulenkörper (14) vorgesehen ist, in welchem Lager (36, 37) der Welle (35) des Rotors (32) dergestalt ausgeformt sind, daß die Welle (35) auf wenigstens einer vorderen Außenseite (12) aus dem Spulenkörper (14) herausragt,
dadurch gekennzeichnet, daß
- auf der vorderen Außenseite (12) einer der beiden Teile (15, 16) des Spulenkörpers (14) nasenförmige Klipse (24-27) zur klemmenden Anbringung eines Zwischenkörpers (2) und
- in dem Spulenkörper (14) parallel zu der Welle (35) Bohrungen (38-43) für Anschlußstifte (4-7) vorgesehen sind.

2. Kreuzspul-Drehmagnetanordnung nach Anspruch 1,
**dadurch gekennzeichnet,**
daß der Spulenkörper (14) im wesentlichen in einer Querschnittsebene (A-A) geteilt ist.

3. Kreuzspul-Drehmagentanordnung nach Anspruch 2,
**dadurch gekennzeichnet,**
daß aus jedem der beiden Teile (15, 16) des Spulenkörpers (14) eines der Lager (36, 37) der Welle (35) ausgeformt ist.

4. Kreuzspul-Drehmagnetanordnung nach einem der Ansprüche 1 - 3,
**dadurch gekennzeichnet,**
daß der Zwischenkörper (2) ein Getriebe umschließt, in welches die aus der vorderen Außenseite (12) des Spulenkörpers (1) herausragende Welle (35) mittels eines Ritzels (13) eingreift.

5. Kreuzspul-Drehmagnetanordnung nach Anspruch 4,
**gekennzeichnet durch**
eine exzentrisch angeordnete Abtriebswelle (35), die aus dem Zwischenkörper (2) auf dessen dem Spulenkörper (14) abgewandter Seite (8) herausragt.

6. Kreuzspul-Drehmagnetanordnung nach Anspruch 4 oder 5,
**dadurch gekennzeichnet,**
daß das Getriebe mehrere miteinander spielfrei in Eingriff stehende Zahnräder (50 - 53) und Ritzel (54 - 57) umfaßt, von denen ein Zahnrad (53) auf der Abtriebswelle (3) mit einer vorgespannten Feder (59) in Verbindung steht.

7. Kreuzspul-Drehmagnetanordnung nach einem der Ansprüche 1 - 3,
**dadurch gekennzeichnet,**
daß der Zwischenkörper (2) ein Rückstellelement, einen Anschlag und eine Dämpfungseinrichtung einschließt, die mit der aus der vorderen Außenseite (12) des Spulenkörpers (14) herausragenden Drehachse (35) in Verbindung steht.

8. Kreuzspul-Drehmagnetanordnung nach einem der Ansprüche 1 - 3,
**dadurch gekennzeichnet,**
daß die Anschlußstifte ( 4 - 7) zumindest aus der vorderen Außenseite des Spulenkörpers (14) soweit herausragen, daß der Spulenkörper mit aufgesetztem Zwischenkörper (2) anschließbar ist, wobei die Anschlußstifte (4 - 7) den Zwischenkörper (2) durchdringen.

9. Kreuzspul-Drehmagnetanordnung nach Anspruch 8,
**dadurch gekennzeichnet,**
daß die Anschlußstifte ( 4 - 7) außerdem aus einer hinteren Außenseite des Spulenkörpers (14) herausragen.

10. Kreuzspul-Drehmagnetanordnung nach einem der Ansprüche 1 - 9,
**dadurch gekennzeichnet,**
daß der Spulenkörper (14) innen zylindrisch mit vier längs des Umfangs äquidistant angeordneten Stegen (17 - 20), die außen zylindrisch verlaufen, geformt ist und daß auf den Spulenkörper (14) konzentrisch ein Abschirmring (48) aufschiebbar ist, zu dem der Zwischenkörper (2) fluchtet.

11. Kreuzspul-Drehmagnetanordnung nach Anspruch 10, dadurch gekennzeichnet, daß der konzentrische Abschirmring (48) auf dem Spulenkörper (14) an nach außen weisende Vorsprünge der Klipse (24-27) axial anstößt.

12. Kreuzspul-Drehmagnetnaordnung nach Anspruch 10 oder 11,
**dadurch gekennzeichnet,**
daß zur Dämpfung des Kreuzspul-Drehmagnetmeßwerks der Abschirmring (48) aus Eisen einer Restkoerzitivfeldstärke von ca. 5 Öe besteht.

## Claims

1. A crossed coil rotary magnet arrangement with
- a rotor (32) rotatably mounted together with a shaft (35), which rotor consists in particular of a permanent magnet with diametrically opposed permanent magnet poles,
- a coil arrangement which comprises coils (10, 11) disposed at an angular separation from each other of 90 degrees in particular, wherein
- a coil housing (14) split into two parts (15, 16) is provided for receiving the coils (10, 11), in which coil housing bearings (36, 37) are formed for the shaft (35) of the rotor (32) in such a way that the shaft (35) projects from the coil housing (14) on at least one front external face (12),
characterised in that
- lug-shaped clips (24-27) are provided on the front external face (12) of one of the two parts (15, 16) of the coil housing (14) for the clamped attachment of an intermediate body (2) and
- holes (38-43) for connection pins (4-7) are provided in the coil housing (14) parallel to the shaft (35).

2. A crossed coil rotary magnet arrangement according to claim 1, characterised in that the coil housing (14) is split essentially on a transverse plane (A-A).

3. A crossed coil rotary magnet arrangement according to claim 2, characterised in that one of the bearings (36, 37) of the shaft (35) is formed from each of the two parts (15, 16) of the coil housing (14).

4. A crossed coil rotary magnet arrangement according to any one of claims 1 to 3, characterised in that the intermediate body (2) encompasses a set of gears with which the shaft (35) projecting from the front external face (12) of the coil housing (1) engages by means of a pinion (13).

5. A crossed coil rotary magnet arrangement according to claim 4, characterised by an eccentrically disposed driven shaft (35) which projects from the intermediate body (2) on the face (8) of the latter remote from the coil housing (14).

6. A crossed coil rotary magnet arrangement according to claim 4 or 5, characterised in that the set of gears comprises a plurality of gear wheels (50 - 53) and pinions (54 - 57) in engagement with each other free from backlash, one gear wheel (53) of which on the driven shaft (3) is connected to a prestressed spring (59).

7. A crossed coil rotary magnet arrangement according to any one of claims 1 to 3, characterised in that the intermediate body (2) includes a resetting element, a stop and a damping device which are connected to the axis of rotation (35) projecting from the front external face (12) of the coil housing (14).

8. A crossed coil rotary magnet arrangement according to any one of claims 1 to 3, characterised in that the connection pins (4 - 7) project at least from the front external face of the coil housing (14) to such an extent that the coil housing can be attached with the intermediate body (2) fitted, wherein the connection pins (4 - 7) pass through the intermediate body (2).

9. A crossed coil rotary magnet arrangement according to claim 8, characterised in that the connection pins (4 - 7) additionally project from a rear external face of the coil housing (14).

10. A crossed coil rotary magnet arrangement according to any one of claims 1 to 9, characterised in that the coil housing (14) is shaped cylindrically inside, with four webs (17 - 20) disposed equidistantly around the circumference, the outsides of which webs extend cylindrically, and a screening ring (48), with which the intermediate body (2) is aligned, can be slipped concentrically on to the coil housing (14).

11. A crossed coil rotary magnet arrangement according to claim 10, characterised in that the concentric screening ring (48) on the coil housing (14) axially adjoins outwardly-pointing projections on the clips (24 - 27).

12. A crossed coil rotary magnet arrangement according to claim 10 or 11, characterised in that the screening ring (48) consists of iron with a residual coercive field strength of about 5 Oe for damping the crossed coil rotary magnet measuring system.

## Revendications

1. Dispositif à bobines croisées et à aimant rotatif, comprenant
- un rotor (32), qui est monté rotatif conjointement à un arbre (35) et consiste, notamment, en un aimant permanent à pôles diamétralement opposés,
- un groupe de bobines, comportant des bobines (10, 11) agencées avec espacement angulaire mutuel mesurant notamment 90 degrés, dispositif dans lequel
- est prévu, pour recevoir les bobines (10, 11), un corps de bobine (14) scindé en deux parties (15, 16) et dans lequel des paliers (36, 37) de l'arbre (35) du rotor (32) sont ménages en saillie, de telle sorte que l'arbre (35) dépasse au-delà du corps de bobine (14) sur au moins une face externe antérieure (12),
caractérisé par le fait que
- des organes encrantables (24-27) en forme de becs sont prévus sur la face externe antérieure (12) de l'une des deux parties (15, 16) du corps de bobine (14), pour la mise en place par coincement d'un corps intercalaire (2), et
- des trous (38-43) destinés à des fiches de raccordement (4-7) sont prévus dans le corps de bobine (14), parallèlement à l'arbre (35).

2. Dispositif à bobines croisées et à aimant rotatif, selon la revendication 1,
caractérisé par le fait
que le corps de bobine (14) est scindé, en substance, dans un plan de section transversale (A-A).

3. Dispositif à bobines croisées et à aimant rotatif, selon la revendication 2,
caractérisé par le fait
que l'un des paliers (36, 37) de l'arbre (35) est ménagé en saillie à partir de chacune des deux parties (15, 16) du corps de bobine (14).

4. Dispositif à bobines croisées et à aimant rotatif, selon l'une des revendications 1-3,
caractérisé par le fait
que le corps intercalaire (2) entoure un engrenage dans lequel l'arbre (35), dépassant de la face externe antérieure (12) du corps de bobine (1), vient en prise au moyen d'un pignon (13).

5. Dispositif à bobines croisées et à aimant rotatif, selon la revendication 4,
caractérisé par
un arbre de sortie (35) à disposition excentrée, dépassant au-delà du corps intercalaire (2) sur la face (8) de ce dernier qui est tournée à l'opposé du corps de bobine (14).

6. Dispositif à bobines croisées et à aimant rotatif, selon la revendication 4 ou 5,
caractérisé par le fait
que l'engrenage comprend plusieurs roues dentées (50-53) et pignons (54-57) en prise mutuelle sans aucun jeu, parmi lesquels une roue dentée (53) est en liaison avec un ressort préchargé (59), sur l'arbre de sortie (3).

7. Dispositif à bobines croisées et à aimant rotatif, selon l'une des revendications 1-3,
caractérisé par le fait
que le corps intercalaire (2) renferme un élément de rappel, une butée et un système d'amortissement qui est en liaison avec l'axe de rotation (35) dépassant au-delà de la face externe antérieure (12) du corps de bobine (14).

8. Dispositif à bobines croisées et à aimant rotatif, selon l'une des revendications 1-3,
caractérisé par le fait
que les fiches de raccordement (4-7) dépassent au moins au-delà de la face externe antérieure du corps de bobine (14), de telle sorte que le corps de bobine sur lequel le corps intercalaire (2) est placé puisse être raccordé, les fiches de raccordement (4-7) traversant alors le corps intercalaire (2).

9. Dispositif à bobines croisées et à aimant rotatif, selon la revendication 8,
caractérisé par le fait
que les fiches de raccordement (4-7) dépassent, par ailleurs, au-delà d'une face externe postérieure du corps de bobine (14).

10. Dispositif à bobines croisées et à aimant rotatif, selon l'une des revendications 1-9,
caractérisé par le fait
que le corps de bobine (14) est de configuration intérieure cylindrique, avec quatre nervures (17-20) qui sont équidistantes le long du pourtour et s'étendent extérieurement en une forme cylindrique ; et par le fait qu'un anneau de blindage (48) peut être enfilé concentriquement sur le corps de bobine (14), anneau avec lequel le corps intercalaire (2) vient en affleurement.

11. Dispositif à bobines croisées et à aimant rotatif, selon la revendication 10, caractérisé par le fait que l'anneau concentrique de blindage (48) vient buter axialement, sur le corps de bobine (14), contre des saillies des organes encrantables (24-27) qui sont orientées vers l'extérieur.

12. Dispositif à bobines croisées et à aimant rotatif, selon la revendication 10 ou 11,
caractérisé par le fait
que, pour amortir-le mécanisme mesureur à bobines croisées et à aimant rotatif, l'anneau de blindage (48) consiste en du fer d'une intensité résiduelle de champ coercitif d'environ 5 Oe.
